Europäisches Patentamt

European Patent Office

Office européen des brevets

(19)

(11) Veröffentlichungsnummer: **0 387 382 B1**

# (12) EUROPÄISCHE PATENTSCHRIFT

(45) Veröffentlichungstag der Patentschrift :
**27.11.91 Patentblatt 91/48**

(51) Int. Cl.$^5$: **B62M 1/02, B62M 3/04**

(21) Anmeldenummer : **89104785.4**

(22) Anmeldetag : **17.03.89**

(54) **Kurbelgetriebe für Fahrräder, Dreiräder oder dergleichen.**

(43) Veröffentlichungstag der Anmeldung :
**19.09.90 Patentblatt 90/38**

(45) Bekanntmachung des Hinweises auf die
Patenterteilung :
**27.11.91 Patentblatt 91/48**

(84) Benannte Vertragsstaaten :
**DE FR GB IT NL**

(56) Entgegenhaltungen :
**WO-A-88/06997
FR-A- 755 303**

(73) Patentinhaber : **ZIMMERMANN, Adolf
Storistrasse 6
W-8100 Garmisch-Partenkirchen (DE)**

(72) Erfinder : **ZIMMERMANN, Adolf
Storistrasse 6
W-8100 Garmisch-Partenkirchen (DE)**

(74) Vertreter : **Flosdorff, Jürgen, Dr.
Alleestrasse 33
W-8100 Garmisch-Partenkirchen (DE)**

EP 0 387 382 B1

Jouve, 18, rue Saint-Denis, 75001 PARIS

## Beschreibung

Die Erfindung betrifft ein Kurbelgetriebe für Fahrräder, Dreiräder oder dergleichen gemäß dem Oberbegriff des Patentanspruchs 1.

Das seit mehr als 100 Jahren bekannte Kurbelgetriebe ist bei pedalgetriebenen Fahrzeugen wie Fahrrädern, Dreirädern, Tretbooten und ähnlichen Fahrzeugen bisher im wesentlichen unverändert beibehalten worden. Es hat zwar vielfältige Bemühungen gegeben, die von dem Fahrer auf das Pedal ausgeübte Kraft in ein erhöhtes Drehmoment umzusetzen, jedoch waren die hierzu vorgeschlagenen Lösungen für die Praxis mehr oder weniger ungeeignet. So sind beispielsweise einer Verlängerung der Pedalkurbel zur Erzeugung eines größeren Hebels durch die Beinlänge des Fahrers enge Grenzen gesetzt, so daß die größte in der Praxis verwendbare Pedalkurbel eines Fahrers eine Länge von etwa 170 mm hat.

Da sich demnach bei einem zentrisch kreisrunden Tritt der Pedalkurbel deren Hebelarm nicht weiter erhöhen läßt, ist versucht worden, auf andere Weise zu einer wirkungsvolleren Umsetzung der Trittkraft zu gelangen. So wurde in der AT-PS 5698 bereits vor sehr langer Zeit vorgeschlagen, die Pedalkurbel aus zwei durch einen Exzenter gegeneinander verschiebbaren Armen auszubilden, so daß das zugehörige Pedal eine exzentrische Kreisbewegung um das Tretlager ausführt. Der mit dem Pedal versehene vordere Arm der Kurbel ist dabei verschieblich in dem hinteren, fest mit der Tretlagerachse verbundenen Arm der Kurbel geführt und greift mit einem Zapfen in einem Exzenterring ein, der die zur Tretlagerachse exzentrische Kreisbewegung erzwingt. Der feststehende Exzenterring ist so angeordnet, daß die Kurbel in der horizontalen, in Fahrtrichtung weisenden Stellung ihre größte Länge hat, so daß der Hebelarm des Pedals im Augenblick der größten Trittkraft sein Maximum erreicht und das abgegebene Drehmoment maximiert ist. Dieser bekannte Kurbelmechanismus hat mehrere Nachteile. Da der mit dem Pedal versehene Arm der Kurbel verschieblich in dem gabelförmigen anderen Arm der Kurbel geführt ist, wird er in der senkrechten, nach unten weisenden Lage, in der der Fahrer eines Fahrrades häufig mit seinem ganzen Gewicht auf dem Pedal steht, lediglich von dem Zapfen gehalten, der in den Exzenterring eingreift. Da das Pedal senkrecht von der Pedalkurbel wegweist, entstehen vor allem in dieser Lage sehr große Biegekräfte, die als Torsionsmoment den Exzenterring derart belasten, daß dieser den Belastungen nicht standhalten kann. Außerdem bedingt die Tretkurbelverlängerung einen um die Verlängerung vergrößerten Abstand des Vorderrades vom Tretlager, was den über viele Jahre entwickelten Fahrradrahmenbau ungünstig verändert.

Ein weiterer entscheidender Nachteil dieses bekannten Kurbelmechanismus liegt darin, daß durch diesen die Balance eines Fahrers erheblich beeinträchtigt ist. Während ein zentrischer Rundtritt des Pedals um das Tretlager das Gleichgewicht des Fahrers fördert, weshalb Fahrradartisten mit sehr kleinen Übersetzungen fahren, da durch häufiges zentrisches Rundtreten ihr Gleichgewicht auf dem Fahrrad stabilisiert wird, bewirkt ein exzentrischer Trittkreis eine erheblich gestörte Balance des Fahrers, so daß ein mit dem bekannten Kurbelmechanismus ausgestattetes Zweirad nicht die erforderliche Sicherheit bietet. Mit einem exzentrischen Trittkreis läßt sich daher das Problem einer besseren Umsetzung der Trittkraft nicht lösen.

Aus der DE-PS 92281 ist ein Kurbelgetriebe für Fahrräder bekannt, bei dem die Tretkurbeln eine zentrische Kreisbewegung ausführen, die über zugehörige Führungsstangen auf ein jeweiliges Gleitteil übertragen wird, das in einer Gleitkurbel verschieblich gehalten ist und eine exzentrische Kreisbewegung um eine Antriebsachse ausführt. Bei dieser bekannten Ausführungsform sind drei hintereinander angeordnet Wellen vorgesehen und über Kupplungsstangen antriebsmäßig miteinander verbunden, was den Nachteil hat, daß die hierdurch langgestreckte Anordnung bei einem herkömmlichen Fahrradrahmen nicht verwendbar ist, da der erforderliche Platz nicht zur Verfügung steht. Außerdem hat das bekannte Kurbelgetriebe den Nachteil, daß es den erforderlichen glatten runden Tritt nicht gewährleistet, so daß zwangsläufig Trittstörungen hervorgerufen werden. Der Grund hierfür liegt darin, daß die auf die Pedalkurbel aufgebrachte Kraft nach Durchlauf durch die obere Totpunktlage von der Führungsstange zunächst als Druckkraft auf die Gleitkurbel übertragen wird, wobei die Druckkraft zunehmend in eine Biegebelastung der Führungsstange übergeht, deren Maximum etwa in der horizontalen nach vorne weisenden Stellung der Gleitkurbel erreicht wird. Anschließend wird die Trittkraft in zunehmendem Maße als Zugkraft auf die Gleitkurbel übertragen. Durch die Biegebelastung wird die an beiden Enden gelagerte Führungsstange durchgebogen, wodurch sich ihre Länge ändert, so daß ein glatter Rundtritt ausgeschlossen ist. Die auf die Gleitkurbel übertragenen, ständig wechselnden Druck- und Zugkräfte führen außerdem dazu, daß der in der Gleitkurbel ausgebildete Schlitz in kürzester Zeit ausgeschlagen wird.

Aus der DE-PS 3720364 ist ferner ein Kurbelgetriebe gemäß dem Oberbegriff des Patentanspruchs 1 bekannt, bei dem die Pedalkurbeln über Führungsstangen mit jeweils einem Gleitteil verbunden sind, das in einer Gleitkurbel verschieblich gehalten ist, die ihrerseits auf einer Antriebsachse gelagert ist, die gegenüber der Tretkurbelachse nach oben und in Fahrzeuglängsrichtung hinten versetzt ist. Das Gleitteil ist auf einem feststehenden Exzenterring geführt, der das Gleitteil eine exzentrische Kreisbewegung um die Antriebsachse ausführen läßt, derart, daß der Hebelarm der Gleitkurbel in der nach vorne weisenden Stellung der Pedalkurbel

2

verlängert ist, wodurch das Antriebsmoment um das Antriebslager erhöht wird. Damit ist bei dem vorbekannten Kurbelmechanismus der zum Antrieb des Fahrzeugs erforderliche Kraftaufwand unter Beibehaltung eines zentrischen Trittkreises der Pedale beträchtlich verringert.

Allerdings hat dieser Kurbelmechanismus infolge der beidseitig des Rahmens befestigten Exzenterringe und der zugehörigen Gleitkurbeln einen recht aufwendigen Aufbau. Die Exzenterringe erstrecken sich bis in eine beträchtliche Höhe oberhalb der Tretkurbeln und sind mit den umlaufenden Gleitkurbeln nur schwer abzudecken, so daß ein Schutz vor Verletzung und Verunreinigung des Mechanismus Probleme bereitet.

Der vorliegenden Erfindung liegt demnach die Aufgabe zugrunde, ein Kurbelgetriebe für Fahrräder, Dreiräder oder dergleichen der betrachteten Art so zu verbessern, daß es unter Beibehaltung einer ausreichenden Stabilität und eines verringerten Kraftaufwandes zum Antrieb des Fahrzeugs einen einfacheren Aufbau hat und besser gegen Verschmutzung und Verletzung einer Person zu sichern ist.

Diese Aufgabe wird erfindungsgemäß durch die im Kennzeichen des Patentanspruchs 1 angegebenen Merkmale gelöst.

Vorteilhafte Weiterbildungen der Erfindung sind in den Unteransprüchen gekennzeichnet.

Bei dem erfindungsgemäßen Kurbelgetriebe ist die obere, nach hinter versetzte Antriebsachse mit herkömmlichen Antriebskurbeln verbunden, die jeweils über eine im wesentlichen L-förmige Winkelstange gelenkig mit der zugehörigen Pedalkurbel verbunden ist, derart, daß in der nach vorne weisenden Stellung der Pedalkurbel der Hebelarm der Antriebskurbel durch den zugeordneten Schenkel der Winkelstange verlängert ist. Hierbei ist das jeweils zusammengehörende Kurbelpaar stets im wesentlichen parallel zueinander angeordnet, und das Achsmaß der Länge der Winkelstangenschenkel, das durch den Abstand der Gelenkpunkte vom Schnittpunkt der Längsmittelachsen im Eckbereich der Winkelstange vorgegeben ist, entspricht der Versetzung der Tretlagerachse und der Antriebsachse in Richtung der Höhe des Fahrzeugs und dessen Längserstreckung.

Infolge der Verlängerung der Antriebskurbel durch den an dieser angreifenden Schenkel der Winkelstange wird der Hebelarm der übertragenen Antriebskraft vergrößert, wobei die maximale Länge und damit der größte Hebelarm in der waagerechten, nach vorne weisenden Stellung der Pedalkurbel sowie der Antriebskurbel erreicht ist. Wenn nach einem Vorschlag der Erfindung der mit der Antriebskurbel verbundene Schenkel die halbe Länge der Pedalkurbel und damit der Antriebskurbel aufweist, wird das Antriebsmoment infolge des in der waagerechten, nach vorne weisenden Stellung um 50% verlängerten Hebelarms um die Hälfte vergrößert.

Das erfindungsgemäße Kurbelgetriebe hat einen äußerst einfachen Aufbau, da lediglich die Anordnung einer zusätzlichen herkömmlichen Achse mit ebenfalls herkömmlichen Kurbeln erforderlich ist, die mittels der beiden Winkelstangen mit den Pedalkurbeln zu verbinden sind. Die Antriebskurbeln können hierbei ohne weiteres eine geringere Stabilität haben als die Pedalkurbeln, da sie keinen Torsionsbelastungen aus den Pedalen, sondern nur Zug- und Biegekräften in ihrer Ebene ausgesetzt sind.

Ein weiterer Vorteil des erfindungsgemäßen Kurbelgetriebes ist darin zu sehen, daß dieses eine geringe Bauhöhe hat, wobei sich die Antriebsachse mit dem drehfest verbundenen Zahnkranz kaum oberhalb des Trittkreises der Pedale befindet. Dieser Bereich läßt sich ohne weiteres von einer Schutzabdeckung derart abschirmen, daß Verletzungen an dem Mechanismus zuverlässig vermieden sind und daß das Kurbelgetriebe weitestgehend vor Verschmutzung geschützt ist. Außerdem nimmt das Kurbelgetriebe gegenüber der seit mehr als 100 Jahren üblichen Konstruktion praktisch keinen zusätzlichen seitlichen Raum in Anspruch, so daß die Fahreigenschaften auch in dieser Hinsicht nicht beeinträchtigt sind.

An jedem herkömmlichen Rahmen steht der zur Befestigung der zusätzlichen Antriebsachse erforderliche Platz zur Verfügung, wobei die Achse in einem lediglich rohrförmigen Gehäuse gelagert werden kann, das mit einfachen Mitteln am Rahmen zu befestigen ist. Es sind demnach keinerlei Änderungen an der bewährten Bauart des Rahmens erforderlich, die die Fahreigenschaften des Fahrrades beeinträchtigen könnten. Das Kurbelgetriebe hat außerdem eine ausreichende Stabilität, um allen durch die Kraftübertragung auf die Antriebskurbel entstehenden Belastungen zuverlässig standzuhalten.

In einer vorteilhaften Ausgestaltung der Erfindung ist vorgesehen, daß der drehfest mit der Antriebsachse verbundene Zahnkranz über eine Kette mit einem im Bereich der Tretlagerachse angeordneten Leerlaufzahnkranz verbunden ist, der seinerseits vorzugsweise über Mitnehmerbolzen mit einem Kettenrad drehfest verbunden ist. Dieses Kettenrad ist über eine zweite Kette mit dem Zahnkranz des Antriebsrades des Fahrzeuges, vorzugsweise des Hinterrades, verbunden. Dabei kann die obere Kette wegen der kleineren Zahnkränze eine geringere Stärke haben.

Mit Vorteil wird vorgeschlagen, den Leerlaufzahnkranz und das damit verbundene Kettenrad auf dem Tretlagergehäuse zu lagern, und zwar über Kugellager. Außerdem wird mit besonderem Vorteil vorgeschlagen, daß der auf der Antriebsachse sitzende Zahnkranz einen größeren Durchmesser hat als der Leerlaufzahnkranz, so daß infolge dieser Übersetzung das Kettenrad nicht vergrößert werden muß, um das vergrößerte Antriebsmoment umzusetzen, da ein beträchtlich vergrößertes Kettenrad unerwünschte rahmenbauliche Veränderungen erforderlich machen würde und zu Festigkeitsproblemen des Kettenrades führen würde. Die vorgeschlagene zweistufige Übersetzung vermeidet derartige Nachteile.

Zweckmäßigerweise ist jede Winkelstange im Bereich ihrer beiden freien Enden mit Bohrungen versehen, in denen Kugellager angebracht sind, mit denen die Winkelstange drehbar auf der gegenüber herkömmlichen Ausführungen geringfügig verlängerten Pedalachse bzw. einem in das freie Ende des oberen Antriebspedals eingreifenden Bolzen gelagert ist. Diese Ausbildung ist einfach zu treffen und mit geringen Kosten verbunden.

Damit die Winkelstange allen auftretenden Belastungen sicher standhält, kann es erforderlich sein, in ihrem Eckbereich vergrößerte Querschnittsabmessungen, vorzugsweise eine größere Breite vorzusehen.

Die Pedalkurbeln und die Antriebskurbeln sollten dieselbe Länge aufweisen, wobei die Antriebskurbeln durchaus leichter ausgeführt sein oder aus einem Material geringerer Festigkeit bestehen können, da sie geringeren Belastungen ausgesetzt sind, wie bereits weiter oben erwähnt ist.

Wenn nach einem weiteren Vorschlag der Erfindung der an der Antriebskurbel angreifende Schenkel der Winkelstange die halbe Kurbellänge aufweist, ist der Hebelarm in der waagerechten, nach vorne weisenden Stellung um 50% verlängert, wodurch das Antriebsmoment entsprechend vergrößert ist.

Die Zahnkränze, das Kettenrad und die beiden Ketten lassen sich auf einfache Weise durch eine Schutzabdeckung seitlich abschirmen, wenn diese entsprechend nach oben verlängert ist. Hierzu steht zwischen den vorteilhafterweise in einer Ebene liegenden, zugeordneten Kurbeln und dem Rahmen ausreichend Raum zur Verfügung.

Ein Ausführungsbeispiel der Erfindung ist in der nachfolgenden Beschreibung anhand der Zeichnung näher erläutert. Dabei zeigen :

Fig. 1     eine Seitenansicht des erfindungsgemäßen Kurbelgetriebes in einer Stellung, in der die Pedalkurbel und die Antriebskurbel waagerecht nach vorne weisen, wobei zusätzliche eine rückwärtige Lage im linken Teil der Figur und die senkrechte, nach oben weisende Stellung angedeutet sind, und

Fig. 2     eine Vorderansicht des Kurbelgetriebes gemäß Fig. 1 in einer vergrößerten Darstellung.

Das Kurbelgetriebe ist auf weitgehend schematische Weise an einem Fahrrad dargestellt, von dem in den Figuren ein Rahmen 1 lediglich angedeutet ist. Das Kurbelgetriebe enthält eine untere Tretlagerachse 2, die in einem Tretlagergehäuse 3 drehbar gelagert ist und an der zwei Pedalkurbeln 4 angesetzt sind, an deren freien Enden Pedale 5 nach außen weisen.

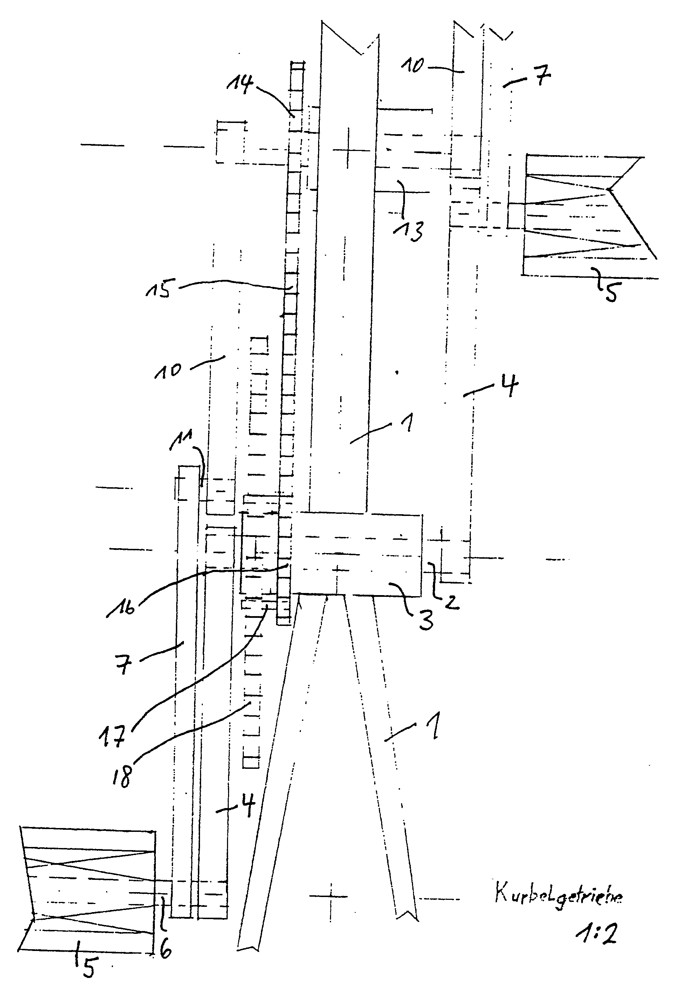

Die Pedale 5 sind jeweils mittels einer Pedalachse 6 an der Pedalkurbel 4 befestigt und durchgreifen eine Bohrung einer L-förmigen Winkelstange 7, die einen längeren Schenkel 8 und einem im rechten Winkel abgewinkelten, kürzeren Schenkel 9 aufweist, der an dem Endabschnitt einer Antriebskurbel 10 angelenkt ist. Hierzu durchgreift ein Bolzen 11 eine entsprechende Bohrung in dem Endabschnitt des Schenkels 9 und ist fest in den Endabschnitt der Antriebskurbel 10 eingeschraubt. In den beiden Bohrungen der Winkelstange 7 sind Kugellager angeordnet, um einen im wesentlichen reibungslosen Lauf zu gewährleisten. Wie insbesondere Figur 2 zeigt, ist jede Pedalkurbel 4 mit der zugehörigen Antriebskurbel 10 in einer Ebene angeordnet, an deren Außenseite sich die L-förmige Winkelstange 7 befindet. Letztere enthält eine Eckenversteifung 11, damit sie allen auftretenden Belastungen standhält.

Die beiden Antriebskurbeln 10 sind an einer Antriebsachse 12 befestigt, die in einem rohrförmigen Gehäuse 13 gelagert ist, das auf geeignete Weise an dem Rahmen 1 angebracht ist. Auf der Antriebsachse 12 sitzt, drehfest mit diesem verbunden, ein Zahnkranz 14. Dieser Zahnkranz 14 ist über eine erste Kette 15 mit einem Leerlaufzahnkranz 16 antriebsmäßig verbunden, der mittels Kugellagern auf dem Tretlagergehäuse 3 drehbar gelagert ist und über Mitnehmerbolzen 17 an einem Kettenrad 18 angesetzt ist, das sich mit diesem dreht. Das Kettenrad 18 ist seinerseits über eine zweite Kette 19 mit dem Zahnkranz 20 des hinteren Antriebsrades des Fahrrads verbunden.

Die Kette 15 wird von einem Kettenspanner 21 stets im gespannten Zustand gehalten.

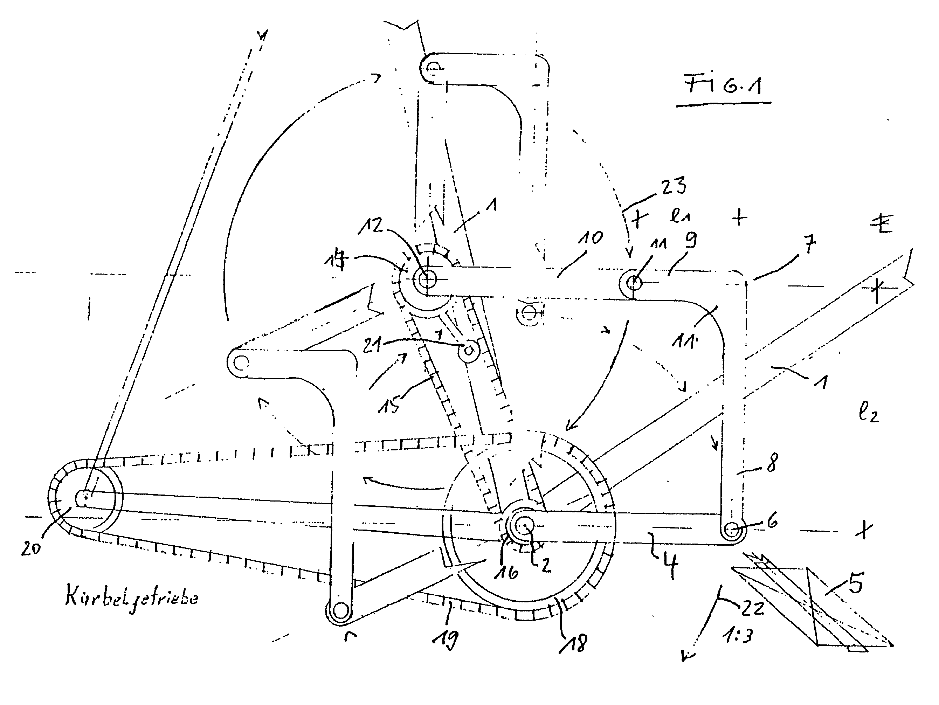

Die Pedalkurbel 4 und die Antriebskurbel 10 sind in der Weise über die Winkelstange 7 miteinander verbunden, daß die beiden Kurbeln bei ihrem Umlauf stets in einer parallelen Lage zueinander verbleiben. In Fig. 1 sind die Kreise 22 und 23 für den Umlauf der beiden Anlenkpunkte der L-förmigen Winkelstange 7 eingezeichnet.

In der waagerecht nach vorne weisenden Stellung der beiden Kurbeln 4 und 10 fluchtet der Schenkel 9 der Winkelstange 7 mit der Antriebskurbel 10 und verlängert den Hebelarm der übertragenen Kraft in der Darstellung um 50%.

Die in Figur 1 vermerkten Achsmaße $l_1$ und $l_2$ der Schenkel 9 und 8 entsprechen dem Maß der Versetzung der Antriebsachse 12 gegenüber der Pedalachse 2 in den beiden zueinander senkrechten Richtungen.

EP 0 387 382 B1

**Patentansprüche**

1. Kurbelgetriebe für Fahrräder, Dreiräder oder dergleichen, mit zwei um 180° zueinander versetzten Pedalkurbeln, die an einer in einem Tretlagergehäuse angeordneten Tretlagerachse befestigt und jeweils mit einem Pedal versehen sind, das um die Tretlagerachse eine zentrische Kreisbewegung ausführt, und die im Bereich ihres freien Endes über je eine Verbindungseinrichtung antriebsmäßig mit einer Antriebsachse verbunden sind, die sich oberhalb und in Längsrichtung des Fahrrades oder dergleichen hinter der Tretlagerachse befindet und mit der ein Zahnkranz drehfest verbunden ist, der antriebsmäßig mit einem Zahnkranz vorzugsweise eines hinteren Antriebsrades des Fahrrades oder dergleichen in Verbindung steht, **dadurch gekennzeichnet,** daß jede Verbindungseinrichtung eine weitere, an der Antriebsachse (12) befestigte Antriebskurbel (10) aufweist sowie eine im wesentlichen L-förmige Winkelstange (7), die mit ihren freien Endabschnitten an den freien Endabschnitten der Pedalkurbel (4) und der Antriebskurbel (10) bei deren parallelen Anordnung angelenkt sind, wobei das Achsmaß der Länge ($l_2$) des an der Pedalkurbel (4) angreifenden Schenkels (8) der Winkelstange (7) im wesentlichen dem Maß der Höhenversetzung der beiden Achsen (2, 12) und das Achsmaß der Länge ($l_1$) des an der Antriebskurbel (10) angreifenden Schenkels (9) im wesentlichen dem Maß der hierzu senkrechten Versetzung der Achsen (2, 12) entspricht und der letztgenannte Schenkel (9) in der nach vorne weisenden Stellung der Pedalkurbel (4) den Hebelarm der Antriebskurbel (10) verländert.

2. Kurbelgetriebe nach Anspruch 1, dadurch gekennzeichnet, daß der fest auf der Antriebsachse (12) sitzende Zahnkranz (14) mit einem im Bereich der Tretlagerachse (2) angeordneten Leerlaufzahnkranz (16) in Antriebsverbindung steht, der mit einem Kettenrad (18) drehfest verbunden ist, das zusammen mit dem Leerlaufzahnkranz (16) frei drehbar gehalten ist und mit dem Zahnkranz (20) des Antriebsrades des Fahrrades oder dergleichen in Antriebsverbindung steht.

3. Kurbelgetriebe nach Anspruch 1 oder 2, dadurch gekennzeichnet, daß der Zahnkranz (14) mit dem Leerlaufzahnkranz (16) und das Kettenrad (18) mit dem Zahnkranz (20) über zwei Ketten (15, 19) miteinander verbunden sind.

4. Kurbelgetriebe nach einem der Ansprüche 1 bis 3, dadurch gekennzeichnet, daß der Leerlaufzahnkranz (16) und das Kettenrad (18) auf dem Tretlagergehäuse (3) gelagert sind.

5. Kurbelgetriebe nach einem der Ansprüche 1 bis 4, dadurch gekennzeichnet, daß die Winkelstange (7) im Bereich ihrer beiden freien Enden mit Bohrungen versehen ist, in denen Kugellager anordnet sind, mit denen die Winkelstange (7) drehbar auf der Pedalachse (6) bzw. einem in das freie Ende des Antriebspedals (10) eingreifenden Bolzen (11) gelagert ist.

6. Kurbelgetriebe nach einem der Ansprüche 1 bis 5, dadurch gekennzeichnet, daß die Winkelstange (7) in ihrem Eckbereich zur Verstärkung eine vergrößerte Breite (11) aufweist.

7. Kurbelgetriebe nach einem der Ansprüche 1 bis 6, dadurch gekennzeichnet, daß die Pedalkurbeln (4) und die Antriebskurbeln (10) dieselbe Länge aufweisen.

8. Kurbelgetriebe nach einem der Ansprüche 1 bis 7, dadurch gekennzeichnet, daß das Achsmaß ($l_1$) des an der Antriebskurbel (10) angreifenden Schenkels (9) der Winkelstange (7) die halbe Länge der Kurbeln (4, 10) aufweist.

9. Kurbelgetriebe nach einem der Ansprüche 1 bis 8, dadurch gekennzeichnet, daß der auf der Antriebsachse (12) sitzende Zahnkranz (14) einen größeren Durchmesser als der Leerlaufzahnkranz (16) hat.

10. Kurbelgetriebe nach einem der Ansprüche 1 bis 9, ferner gekennzeichnet durch eine Schutzabdeckung, die derart nach oben verlängert ist, daß die Zahnkränze (14, 16, 20), das Kettenrad (18) und beide Ketten (15, 19) seitlich abgedeckt sind.

**Claims**

1. A crank mechanism for bicycles, tricycles or the like with, offset by 180° in respect of each other, two pedal cranks which are fixed in a bottom bracket bearing axle disposed in a bottom bracket bearing housing, each being fitted with a pedal which performs a central circular movement about the bottom bracket bearing axle and which in the region of their free end are respectively connected by a connecting device to a driving axle for the transmission of drive, the driving axle being disposed above and, in the longitudinal direction of the bicycle or the like, to the rear of the bottom bracket bearing axle and to which there is rotationally rigidly connected a sprocket wheel which for the transmission of drive is connected to a sprocket wheel preferably of a rear driving wheel of the bicycle or the like, characterised in that each connecting device comprises a further driving crank (10) fixed on the driving axle (12) and also a substantially L-shaped angled rod (7) of which the free end portions are articulated on the free end portions of the pedal crank (4) and of the driving crank (10) when they are parallel, the axial dimension of the length ($l_2$) of the arm (8) of the angled rod (7) which engages

5

the pedal crank (4) corresponding substantially to the amount of vertical offset of the two axles (2, 12) and the axial dimension of the length ($l_1$) of the arm 9 engaging the driving crank (10) corresponds substantially to the amount of offset at right-angles thereto of the axles (2, 12), the latter arm (9), in the forwardly pointing position of the pedal crank (4), lengthening the lever arm of the driving crank (10).

2. A crank mechanism according to claim 1, characterised in that the sprocket wheel (14) seated rigidly on the driving axle (12) is connected for drive to an idling sprocket wheel (16) disposed in the region of the bottom bracket bearing axle (2) and rotationally rigidly connected to a pinion (18) which is freely rotatably supported together with the idling sprocket wheel (16) being connected for drive to the sprocket wheel (20) of the driving wheel of the bicycle or the like.

3. A crank mechanism according to claim 1 or 2, characterised in that the sprocket wheel (14) is connected to the idling sprocket wheel (16) while the pinion (18) is connected to the sprocket wheel (20) through two chains (15, 19).

4. A crank mechanism according to one of claims 1 to 3, characterised in that the idling sprocket wheel (16) and the pinion (18) are mounted on the bottom bracket bearing housing (3).

5. A crank mechanism according to one of claims 1 to 4, characterised in that the angled rod (7) is provided in the region of its two free ends with bores in which there are ball bearings by which the angled rod (7) is mounted rotatably on the pedal spindle (6) or on a bolt (11) engaging the free end of the drive pedal (10).

6. A crank mechanism according to one of claims 1 to 5, characterised in that the angled rod (7) has an increased width (11) as a reinforcement of its corner portion.

7. A crank mechanism according to one of claims 1 to 6, characterised in that the pedal cranks (4) and the driving cranks (10) are of the same length.

8. A crank mechanism according to one of claims 1 to 7, characterised in that the axial dimension ($l_1$) of the arm (9) of the angled rod (7) which engages the driving crank (10) is half as long as the cranks (4, 10).

9. A crank mechanism according to one of claims 1 to 8, characterised in that the sprocket wheel (14) seated on the driving axle (12) has a larger diameter than the idling sprocket wheel (16).

10. A crank mechanism according to one of claims 1 to 9, further characterised by a protective covering which is so upwardly extended that the sprocket wheels (14, 16, 20), the pinion (18) and both chains (15, 19) are laterally covered.

## Revendications

1. Mécanisme à manivelles pour bicyclettes, tricycles ou analogues, comportant deux manivelles de pédale décalées de 180° entre elles, qui sont fixées à un axe de palier de pédalier placé dans un boîtier de palier de pédalier et pourvues chacune d'une pédale, laquelle effectue autour de l'axe de palier de pédalier un mouvement circulaire centré et qui, dans la zone de leur extrémité libre sont chacune reliées, en entraînement, par l'intermédiaire d'un dispositif de liaison à un axe d'entraînement, lequel se situe au-dessus de l'axe de palier de pédalier et derrière, dans la direction longitudinale de la bicyclette ou analogue, et est reliée solidairement à une couronne dentée, laquelle est reliée en entraînement à une couronne dentée de préférence d'une roue arrière d'entraînement de la bicyclette ou analogue, **caractérisé en ce que** chaque dispositif de liaison comporte une autre manivelle d'entraînement (10) fixée à l'axe d'entraînement (12) ainsi qu'une barre coudée pour l'essentiel en L (7), qui est articulée par ses segments d'extrémité libres aux segments d'extrémité libres de la manivelle de pédale (4) et de la manivelle d'entraînement (10)dans un agencement parallèle de ces manivelles, la dimension axiale de la longueur ($l_2$)de la branche (8) de la barre coudée (7) en prise sur la manivelle de pédale (4) correspondant essentiellement à la valeur du décalage en hauteur des deux axes (2, 12) et la dimension axiale de la longueur ($l_1$) de la branche (9) en prise sur la manivelle d'entraînement (10) correspondant essentiellement à la valeur du décalage à la verticale des axes (2, 12) et cette dernière branche (9) prolongeant en position vers l'avant de la manivelle de pédale (4) le bras de levier de la manivelle d'entraînement (10).

2. Mécanisme à manivelles selon la revendication 1, caractérisé en ce que la roue dentée (14) fixée sur l'axe d'entraînement (12) est en liaison d'entraînement avec une couronne dentée de marche à vide (16) placée dans la zone de l'axe de palier de pédalier (2), couronne qui est solidaire d'une roue dentée (18), laquelle est maintenue capable de tourner librement en même temps que la couronne dentée de marche à vide (16) et est en liaison d'entraînement avec la couronne dentée (20) de la roue d'entraînement de la bicyclette ou analogue.

3. Mécanisme à manivelles selon la revendication 1 ou 2, caractérisé en ce que sont reliées par l'intermédiaire de deux chaînes (15, 19), la roue dentée (14) à la couronne dentée de marche à vide (16) et la roue dentée (18) à la couronne dentée (20).

4. Mécanisme à manivelles selon l'une des revendications 1 à 3, caractérisé en ce que la couronne dentée

6

EP 0 387 382 B1

de marche à vide(16) et la roue dentée (18) sont logées sur le boîtier du palier de pédalier (3).

5. Mécanisme à manivelles selon l'une des revendications 1 à 4, caractérisé en ce que la barre coudée (7) est pourvue dans la zone de ses deux extrémités libres d'alésages, dans lesquels sont placés des roulements à billes, grâce auxquels la barre coudée (7) est logée, capable de tourner, sur l'axe de pédale (6) et sur une broche (11) en prise dans l'extrémité libre de la manivelle d'entraînement (10).

6. Mécanisme à manivelles selon l'une des revendications 1 à 5, caractérisé en ce que la barre coudée (7) présente dans sa zone d'angle une plus grosse largeur (11) servant à son renforcement.

7. Mécanisme à manivelles selon l'une des revendications 1 à 6, caractérisé en ce que la manivelle de pédale (4) et la manivelle d'entraînement (10) ont la même longueur.

8. Mécanisme à manivelles selon l'une des revendications 1 à 7, caractérisé en ce que la dimension axiale ($l_1$) de la branche (9) de la barre coudée (7) en prise sur la manivelle d'entraînement (10) représente la moitié de la longueur des manivelles (4, 10).

9. Mécanisme à manivelles selon l'une des revendications 1 à 8, caractérisé en ce que la couronne dentée (14) fixée sur l'arbre d'entrainement (12) offre un plus grand diamètre que la couronne dentée de marche à vide (16).

10. Mécanisme à manivelles selon l'une des revendications 1 à 9, caractérisé en outre par une chape de protection, qui est prolongée vers le haut, de manière à recouvrir latéralement les couronnes dentées (14, 16, 20), la roue dentée (18) et les deux chaînes (15, 19).

7

Fig.1

Kurbelgetriebe

Kurbelgetriebe

1:2